# FASCICULE DE BREVET EUROPEEN

(11) **EP 3 581 420 B1**
(45) Date de publication et mention de la délivrance du brevet: **30.06.2021**
(21) Numéro de dépôt: 19176035.4
(22) Date de dépôt: 22.05.2019
(51) Int. Cl.: B60K 15/035

(54) **RESERVOIR AVEC CANALISATION EMPECHANT UN PASSAGE DE CARBURANT LIQUIDE VERS UN DISPOSITIF DE STOCKAGE DES VAPEURS DE CARBURANT**
TANK MIT LEITUNG, DIE DAS DURCHFLIESSEN VON FLÜSSIGEM KRAFTSTOFF IN RICHTUNG EINER SPEICHERVORRICHTUNG VON KRAFTSTOFFDÄMPFEN VERHINDERT
TANK WITH CONDUIT PREVENTING A PASSAGE OF LIQUID FUEL TOWARDS A FUEL VAPOUR STORAGE DEVICE

(30) Priorité: 11.06.2018 FR 1855057
(43) Date de publication de la demande: 18.12.2019
(73) Titulaire: PSA Automobiles SA, 78300 Poissy (FR)
(72) Inventeur: ERBA, CEDRIC, 25310 THULAY (FR)

(56) Documents cités:
- WO-A1-2015/020795
- WO-A1-2016/130668
- DE-A1-102014 007 648
- FR-A1- 2 821 801
- FR-A5- 2 069 379
- US-A1- 2011 278 286

## Description

La présente invention concerne un réservoir avec canalisation empêchant un passage de carburant liquide vers un dispositif de stockage et de traitement des vapeurs de carburant.

De manière générale, selon l'état de la technique, un réservoir de carburant est délimité par une enveloppe externe dont une face, destinée à être une face supérieure en position montée du réservoir de carburant dans un véhicule automobile, porte au moins un clapet de ventilation raccordé directement à une canalisation de ventilation conduisant des vapeurs de carburant sortant du réservoir par ledit au moins un clapet de ventilation dans un dispositif de stockage et de traitement des vapeurs de carburant.

Les réservoirs à carburant sont ainsi équipés d'un ou plusieurs clapets de ventilation. Ces clapets de ventilation permettent au réservoir de respirer. Ils permettent aux vapeurs d'essence stockées dans le réservoir d'être évacuées vers un dispositif de stockage et de traitement des vapeurs de carburant, aussi dénommé canister en langue anglo-saxonne.

Les clapets de ventilation servent aussi à réguler la pression interne du réservoir qui enferme des vapeurs, ce quelques soient les conditions d'utilisation statique, notamment les pentes ou les dévers, ou les conditions d'utilisation dynamique du véhicule automobile. En revanche, les clapets de ventilation ne doivent pas laisser s'échapper du carburant liquide. En effet, si du carburant liquide venait à franchir les clapets, alors ce carburant finirait dans le dispositif de stockage et de traitement des vapeurs de carburant et un tel dispositif n'est pas conçu pour stocker ou traiter du carburant liquide.

Si le dispositif de stockage et de traitement des vapeurs de carburant récupère du carburant liquide, alors le moteur ne fonctionnera plus correctement, et dans des cas extrêmes, lorsque le dispositif est complètement saturé de carburant alors le carburant débordera par sa mise à l'air et ceci génèrera ni plus ni moins qu'une fuite de carburant, ce qui est évidemment proscrit.

Il existe une variété importante de clapets de ventilation. Ces clapets de ventilation ne sont pas tous aussi performants les uns que les autres et ne se comportent pas tous correctement sur certaines architectures de réservoir qui sont donc plus ou moins sensibles au problème. Afin de protéger un dispositif de stockage et de traitement des vapeurs de carburant de l'introduction potentielle de carburant liquide qui passerait le ou les clapets de ventilation, alors plusieurs solutions techniques sont possibles.

Pour illustrer l'une d'entre elles, la solution basique consiste à déplacer le dispositif de stockage et de traitement des vapeurs de carburant en hauteur dans le véhicule. Ainsi par gravité, le carburant liquide présent dans la canalisation de ventilation qui alimente le dispositif de stockage et de traitement des vapeurs de carburant retournerait dans le réservoir car il n'atteindrait pas le dispositif de stockage et de traitement des vapeurs de carburant alors en hauteur.

Cependant, il est fréquent que les dispositifs de stockage et de traitement des vapeurs de carburants soient localisés en dessous des réservoirs de carburant et donc en dessous des clapets de ventilation. Dans cette configuration, des clapets sensibles ou non conformes laisseraient passer trop de carburant liquide qui finira dans le dispositif de stockage et de traitement des vapeurs de carburant en contrebas.

Il n'est pas possible de déplacer le dispositif de stockage et de traitement des vapeurs de carburant dans le véhicule à un autre endroit, notamment sur des véhicules déjà commercialisés ou en cours de développement, ce type de modification étant extrêmement complexe et coûteux pour le véhicule automobile au global et pour les usines de fabrication.

Les réservoirs à carburant existants sont équipés d'une ou de canalisations de ventilation qui sortent d'un ou de clapets de ventilation respectifs et qui cheminent directement vers le dispositif de stockage et de traitement des vapeurs de carburant, ceci sans aucun moyen d'interdiction de passage de carburant liquide vers le dispositif de stockage. Ceci est notamment illustré par le document EP-B1- 0 997 336.

Des autres réservoirs de carburant sont connus des documents US 2011/278286 A1, WO 2015/020795 A1, FR 2 069 379 A, DE 10 2014 007 648 A1 et WO 2016/130668 A1.

Par conséquent le problème à base de la présente invention est, pour un réservoir de carburant comprenant au moins un clapet de ventilation raccordé à une canalisation de ventilation acheminant les vapeurs de carburant vers un dispositif de stockage et de traitement des vapeurs de carburant associé au réservoir de carburant, d'empêcher une fuite de carburant liquide par le ou les clapets de ventilation et leur canalisation associée qui aboutirait dans le dispositif de stockage et de traitement des vapeurs de carburant.

Pour atteindre cet objectif, il est prévu selon l'invention un réservoir de carburant selon la revendication 1.

Les canalisations de ventilation en direction du dispositif de stockage et de traitement des vapeurs de carburant sont des canalisations qui sont censées ne véhiculer que des vapeurs de carburant. Or, pratiquement, sur certaines architectures de réservoir et avec certains types de clapet de ventilation, il est possible que du carburant liquide accompagne les vapeurs passant par le clapet.

Les architectures de réservoir à carburant qui présentent plusieurs clapets ou un seul clapet excentré vers une extrémité de la face supérieure de l'enveloppe, vont régulièrement être en contact avec le carburant, et donc le risque de transfert de carburant au dispositif de stockage et de traitement des vapeurs de carburant est pour ces architectures accru.

L'invention ici présentée permet de contourner ingénieusement ce type de phénomène, peu importe le type de clapet, qu'il soit performant ou non, peu importe le type de réservoir à carburant, notamment sa géométrie, sa capacité, sa matière, etc. Cette nouvelle architecture de ventilation pourvue d'une canalisation de prévention par clapet en amont du dispositif de stockage et de traitement des vapeurs de carburant, conçue pour interdire le passage de carburant liquide, par exemple en présentant une portion haute ou surélevée par rapport au niveau du carburant liquide dans le réservoir, empêchera l'introduction de carburant dans le dispositif de stockage et de traitement des vapeurs de carburant.

La solution de la présente invention est d'autant plus intéressante qu'elle n'est technologiquement pas compliquée, en utilisant seulement une ou des canalisations de protection et en ne faisant pas appel à des artifices techniques complexes et coûteux pour protéger le dispositif de stockage et de traitement des vapeurs de carburant.

La présente invention résout l'introduction possible de carburant liquide dans le dispositif de stockage et de traitement des vapeurs de carburant. La présente invention résout aussi des problèmes de qualité relatifs au fonctionnement du moteur thermique, aux fuites de carburant en dehors du véhicule. La mise en oeuvre de la présente invention ne requiert pas d'ajout de nouveaux composants, de maintien des clapets de ventilation existants, quelques soient leurs performances intrinsèques. La solution de la présente invention est adaptable et applicable à tous les systèmes de carburant essence et est une solution non intrusive dans le véhicule, économique car moins coûteuse par rapport à d'autres plus intrusives dans le véhicule.

La solution proposée par la présente invention peut devenir une référence en conception à l'avenir pour tout véhicule dont le dispositif de stockage et de traitement des vapeurs de carburant ne peut être déporté en hauteur.

En résumé, l'invention règle tous les problèmes concernant l'introduction de carburant liquide dans le dispositif de stockage et de traitement des vapeurs de carburant en représentant une avancée technique significative.

Avantageusement, les moyens d'interdiction de passage de carburant liquide vers la canalisation de ventilation sont un positionnement surélevé de la portion dite ci-après surélevée de canalisation de protection par rapport au niveau dudit au moins un clapet de ventilation.

Avantageusement, une hauteur du positionnement surélevé est déterminée par expérience, la hauteur étant suffisante pour que la portion surélevée de canalisation de protection soit au-dessus du niveau dudit au moins un clapet de ventilation en conditions de roulage du véhicule automobile sur une route inclinée ou par dévers faisant passer la face supérieure de l'enveloppe externe du réservoir d'un plan horizontal à un plan incliné avec ledit au moins un clapet de ventilation se trouvant dans une portion alors la plus basse de la face supérieure dans le plan incliné.

La forme de la ou des canalisations de protection doit permettre qu'en termes de configuration/parcours/cheminement de garantir que la ou les canalisations de protection présenteront une portion plus haute que le niveau de carburant liquide dans le réservoir. En effet, dès lors que le réservoir penche, il est possible que le clapet de ventilation soit plongé dans le carburant, et si le clapet fuit ou laisse passer du carburant liquide dans la canalisation de protection, alors le carburant liquide va se diriger vers le dispositif de stockage et de traitement des vapeurs de carburant sauf si la canalisation de protection passe par un point plus haut que le niveau de carburant liquide dans le réservoir.

Avantageusement, la portion surélevée forme une boucle, une branche amont de la canalisation de protection raccordée à la boucle s'étendant dudit au moins un clapet de ventilation vers la portion surélevée et une branche aval de la canalisation de protection raccordée à la boucle s'étendant de la portion surélevée vers la canalisation de ventilation.

L'invention consiste en une nouvelle architecture de la ou des canalisations de protection d'un réservoir à carburant. La configuration et le parcours des canalisations de protection en forme de boucle respective sont définis pour protéger le dispositif de stockage et de traitement des vapeurs de carburant contre l'introduction de carburant liquide dans toutes les conditions d'utilisation du véhicule.

Selon l'invention, la canalisation de protection dudit au moins un clapet s'étend le long de la face supérieure de l'enveloppe du réservoir de carburant.

L'intérêt d'une conception où les canalisations de protection resteraient localisées sur la face supérieure de l'enveloppe externe du réservoir est qu'elle n'est pas intrusive vis-à-vis des autres organes/composants du véhicule, et elle ne perturbe en rien les processus de fabrication du véhicule en usine. C'est une solution technique efficace, non intrusive dans le véhicule, et qui peut être appliquée sur tous les réservoirs à carburant essence lorsque le dispositif de stockage et de traitement des vapeurs de carburant n'est pas localisé en hauteur dans le véhicule.

Selon l'invention, au moins un sillon est creusé sur la face supérieure de l'enveloppe du réservoir de carburant pour une réception au moins partielle de la canalisation de protection.

Avantageusement, ledit au moins un sillon présente une partie recevant au moins partiellement simultanément la canalisation de protection et la canalisation de ventilation.

Avantageusement, au moins une barre de maintien est superposée localement à la canalisation de protection, ladite au moins une barre de maintien s'étendant de 60° à 120° par rapport à la canalisation de protection, les extrémités longitudinales de ladite au moins une barre de maintien présentant des moyens d'encliquetage dans la face supérieure de l'enveloppe externe du réservoir de carburant.

La ou les barres de maintien des canalisations sur l'enveloppe de réservoir ne représentent pas une solution essentielle de la présente l'invention mais purement optionnelle. L'utilisation d'une barre ou de barres de maintien est plutôt liée au fait qu'il est difficile de brider l'ensemble des lignes par des encliquetages sur enveloppe par l'ajout de clips/écarteurs soudés faute de manque de place possible sur un réservoir de carburant selon la présente invention.

Avantageusement, le réservoir de carburant comporte au moins deux clapets de ventilation, chaque clapet de ventilation présentant une canalisation de protection respective, les deux canalisations de protection présentant un point de raccordement pour déboucher simultanément dans la canalisation de ventilation.

Avantageusement, lesdits au moins deux clapets de ventilation sont disposés chacun vers une extrémité longitudinale respective de la face supérieure de l'enveloppe externe du réservoir de carburant, les deux canalisations de protection s'étendant en sens inverse vers l'autre extrémité longitudinale de l'enveloppe opposée à l'extrémité longitudinale portant leur clapet de ventilation associé, chaque canalisation de protection formant une boucle à ladite autre extrémité longitudinale.

D'autres caractéristiques, buts et avantages de la présente invention apparaîtront à la lecture de la description détaillée qui va suivre et au regard des dessins annexés donnés à titre d'exemples non limitatifs et sur lesquels :

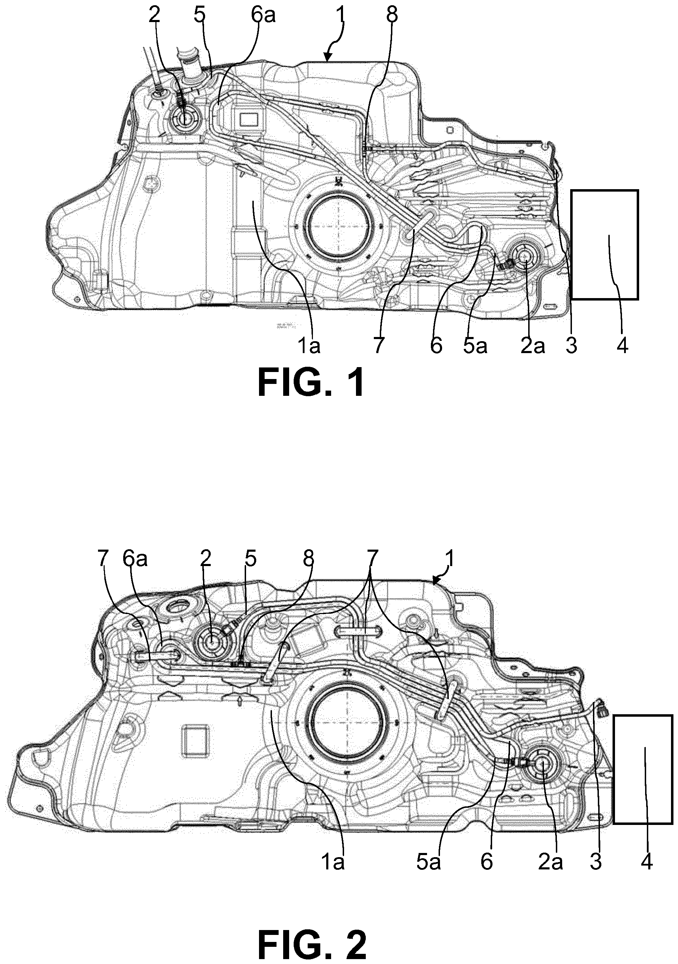

- les figures 1 et 2 sont des représentations schématiques d'une face supérieure d'une enveloppe externe d'un réservoir de carburant comprenant deux clapets de ventilation et une canalisation de ventilation ainsi qu'une canalisation de protection par clapet contre un passage de carburant liquide vers la canalisation de ventilation destinée à déboucher sur un dispositif de stockage et de traitement des vapeurs de carburant, ceci selon deux formes de réalisation respectives conformes à la présente invention.

Il est à garder à l'esprit que les figures sont données à titre d'exemples et ne sont pas limitatives de l'invention. Elles constituent des représentations schématiques de principe destinées à faciliter la compréhension de l'invention et ne sont pas nécessairement à l'échelle des applications pratiques. En particulier, les dimensions des différents éléments illustrés ne sont pas représentatives de la réalité.

Dans ce qui va suivre, il est fait référence à toutes les figures prises en combinaison. Quand il est fait référence à une ou des figures spécifiques, cette figure est à prendre en combinaison avec l'autre figure pour la reconnaissance des références numériques désignées.

Dans ce qui va suivre, on comprend les termes « verticalement », « horizontalement », « supérieur » et autres références à des positionnements spatiaux en référence aux composants, principalement le réservoir de carburant, positionnés dans leur position de fonctionnement et d'usage normal, notamment dans un véhicule automobile disposé sur un plan horizontal.

En se référant aux figures 1 et 2 qui montrent deux formes de réalisation alternatives du réservoir 1 de carburant essence selon la présente invention, l'invention concerne un réservoir 1 de carburant délimité par une enveloppe externe. Une face de l'enveloppe externe est destinée à être une face supérieure 1a en position montée du réservoir 1 de carburant dans un véhicule automobile et sera dénommée ci-après face supérieure 1a.

La face supérieure 1a porte au moins un clapet 2, 2a de ventilation raccordé, directement selon l'état de la technique et indirectement selon la présente invention, à une canalisation de ventilation 3 évacuant des vapeurs de carburant sortant du réservoir 1 par ledit au moins un clapet 2, 2a de ventilation destinées à un dispositif 4 de stockage et de traitement des vapeurs de carburant, illustré très schématiquement aux figures, la canalisation de ventilation 3 n'étant pas montrée raccordée au dispositif 4 de stockage et de traitement des vapeurs de carburant, comme cette canalisation de ventilation 3 devrait l'être.

Aux figures 1 et 2, il est montré deux clapets 2, 2a de ventilation se trouvant chacun vers une extrémité longitudinale de la face supérieure 1a de l'enveloppe en étant sensiblement diagonalement opposés s'il est considéré que la face supérieure 1a présente une forme grossièrement rectangulaire.

Selon l'invention, en opposition avec l'état de la technique qui raccordait la canalisation de ventilation 3 directement sur un clapet 2, 2a de ventilation associé, le réservoir 1 comprend une canalisation de protection 5, 5a pour chaque clapet 2, 2a de ventilation. Cette canalisation de protection 5, 5a présente une extrémité d'entrée reliée au ou à un clapet 2, 2a associé et une extrémité de sortie reliée à une entrée de la canalisation de ventilation 3.

Cette canalisation de protection 5, 5a est donc intercalée entre le clapet 2, 2a ou chaque clapet 2, 2a et une canalisation de ventilation 3 qui peut être commune à plusieurs canalisations de protection 5, 5a. Il est évident qu'il y a une canalisation de protection 5, 5a respective par clapet 2, 2a de ventilation, donc deux canalisations de protection 5, 5a quand il y a deux clapets 2, 2a et ainsi de suite.

Une portion 6, 6a de la canalisation de protection 5, 5a présente des moyens d'interdiction de passage de carburant liquide vers la canalisation de ventilation 3. Ces moyens peuvent être une montée brusque dans la canalisation 5, 5a avec une partie amont se trouvant en dessous d'une partie aval, le carburant liquide étant arrêté par la montée brusque et stagnant dans la partie amont. Il est cependant préféré que les moyens d'interdiction soient effectifs en utilisant la gravité.

Dans la forme de réalisation préférée des moyens d'interdiction, les moyens d'interdiction de passage de carburant liquide vers la canalisation de ventilation 3 peuvent être créés par un positionnement surélevé de la portion dite ci-après surélevée de canalisation de protection 5, 5a par rapport au niveau dudit au moins un clapet 2, 2a de ventilation.

Il convient de choisir une surélévation de la portion qui puisse combattre des mouvements vers le haut du ou des clapets 2, 2a de ventilation dus au roulage du véhicule et aux conditions de roulage, par exemple la déclivité et le dévers de la route.

La protection apportée par la présente invention est avant tout pour traiter de fuites en statique, par exemple pour un véhicule garé en pente ou sur un trottoir, car dans ces conditions le clapet sollicité reste constamment baigné dans le carburant. En pratique, en dynamique, les clapets peuvent se comporter différemment et peuvent ne pas présenter de problème particulier en dynamique, sauf pour des clapets sensibles aux conditions dynamiques.

De ce fait, une hauteur du positionnement surélevé peut être déterminée par expérience. La hauteur peut être suffisante pour que la portion surélevée 6, 6a de canalisation de protection 5, 5a soit au-dessus du niveau dudit au moins un clapet 2, 2a de ventilation en conditions de roulage du véhicule automobile sur une route inclinée ou par dévers.

Un tel roulage peut faire passer la face supérieure 1a de l'enveloppe externe du réservoir 1 d'un plan horizontal qu'elle occupe quand le véhicule roule sur un plan horizontal à un plan incliné dans des conditions de déclivité et de dévers. Dans ce cas, le ou les clapets 2, 2a de ventilation peuvent se trouver dans une portion alors la plus basse de la face supérieure 1a dans le plan incliné.

Au contraire, dans le cas d'au moins un clapet 2, 2a de ventilation disposé vers une extrémité longitudinale et d'au moins un clapet 2, 2a de ventilation disposé vers l'autre extrémité longitudinale de la face supérieure 1a, un des deux clapets 2, 2a sera alors dans une position abaissée tandis que l'autre sera dans une position relevée.

Comme montré aux figures 1 et 2, la portion surélevée de la canalisation de protection 5, 5a peut former une boucle 6, 6a. Une branche amont de la canalisation de protection 5, 5a peut alors être raccordée à la boucle 6, 6a en s'étendant dudit au moins un clapet 2, 2a de ventilation vers la portion surélevée 6, 6a. Une branche aval de la canalisation de protection 5, 5a peut alors être raccordée à la boucle 6, 6a en s'étendant de la portion surélevée formant boucle 6, 6a vers la canalisation de ventilation 3.

Toujours, comme montré aux figures 1 et 2, la canalisation de protection 5, 5a du clapet 2, 2a ou les canalisations de protection associées à un clapet 2, 2a respectif s'étendent le long de la face supérieure 1a de l'enveloppe du réservoir 1 de carburant. Ceci est pour le maintien et la protection des canalisations.

Par exemple, une autre forme de réalisation consiste à faire monter une ou des canalisations de protection plus haut dans le véhicule en quittant le contact avec la face supérieure 1a de l'enveloppe. Ceci est techniquement tout aussi valable que pour une ou des canalisations de protection associées à un clapet 2, 2a respectif s'étendant le long de la face supérieure 1a de l'enveloppe mais plus complexe à industrialiser.

Le ou les canalisations de protection 5, 5a peuvent donc s'élever plus ou moins verticalement au-dessus de la face supérieure 1a et y retourner en formant un coude à leur portion la plus élevée et la plus éloignée de la face supérieure 1a de l'enveloppe. Ceci n'est pas montré aux figures mais il a été conservé pour cette description les références des figures 1 et 2.

Aux figures 1 et 2, il est montré deux clapets 2, 2a de ventilation et une canalisation de protection 5, 5a associée à chaque clapet, donc deux canalisations de protection 5, 5a s'étendant en étant appliquées contre la face supérieure 1a de l'enveloppe du réservoir 1 de carburant.

Tout en étant valable pour un nombre différent de clapets 2, 2a de ventilation et de canalisation de protection 5, 5a, au moins un sillon est creusé sur la face supérieure 1a de l'enveloppe du réservoir 1 de carburant pour une réception au moins partielle de la canalisation de protection 5, 5a.

Comme il est visible à la figure 2, au moins un sillon peut présenter une partie recevant au moins partiellement simultanément les deux canalisations de protection 5, 5a, dont une canalisation de protection 5 aussi bien sur sa branche retour que sa branche aller et la canalisation de ventilation 3.

A la figure 2, une partie du sillon reçoit les branches amont et aval allant et revenant d'une première boucle 6 d'une première canalisation de protection 5 provenant du premier clapet 2 de ventilation ainsi que la branche amont d'une deuxième canalisation de protection 5a provenant du deuxième clapet 2a de ventilation et aussi la canalisation de ventilation 3 débouchant sur le dispositif 4 de stockage et de traitement des vapeurs de carburant.

En se référant à la figure 2, au moins une barre 7 de maintien, à cette figure quatre barres 7 de maintien, peut être superposée localement au moins à la ou aux canalisations de protection 5, 8a et possiblement à la canalisation de ventilation 3 pour certaines des barres 7, la ou les barres 7 de maintien s'étendant de 60° à 120° par rapport à la ou aux canalisations de protection tout en restant dans plan superposé et parallèle au plan contenant les canalisations de protection 5, 5a au niveau de chaque barre de maintien 7.

Les extrémités longitudinales de la ou de chaque barre 7 de maintien peuvent présenter des moyens d'encliquetage dans la face supérieure 1a de l'enveloppe externe du réservoir 1 de carburant. A la figure 1, il est montré une seule barre de maintien 7.

Comme montré aux figures 1 et 2, le réservoir 1 de carburant peut comporter au moins deux clapets 2, 2a de ventilation. Chaque clapet 2, 2a de ventilation peut présenter une canalisation de protection 5, 5a respective, les deux canalisations de protection 5, 5a présentant un point de raccordement 8 pour déboucher simultanément dans la canalisation de ventilation 3.

Aux figures 1 et 2, il est montré un réservoir 1 de carburant équipés de deux clapets 2, 2a de ventilation. D'autres réservoirs 1 de carburant peuvent être équipés de plus ou moins de clapets 2, 2a, la présente invention s'appliquant pour tout nombre de clapets 2, 2a.

En se référant aux figures 1 et 2, si le réservoir 1 penche à gauche alors le clapet 2 de ventilation gauche ou premier clapet 2 sera plongé et noyé dans le carburant liquide contenu dans le réservoir 1. C'est pourquoi il est nécessaire que la première canalisation de protection 5 associée au premier clapet 2 aille à l'opposé vers le deuxième clapet 2a pour monter de niveau.

Le but final est que l'architecture de protection et de ventilation globale du réservoir 1 permette en toutes conditions d'avoir des clapets 2, 2a équipés de canalisations de protection 5, 5a plus hautes que le niveau de carburant liquide dans le réservoir 1. Les deux canalisations de protection 5, 5a se rejoignent en un point de raccordement 8 à partir duquel une canalisation de ventilation 3 se dirige vers le dispositif 4 de stockage et de traitement des vapeurs de carburant.

Cette canalisation de ventilation 3 n'a pas plus de fonction que les canalisations de ventilation existantes aujourd'hui et permet d'assurer la liaison avec le dispositif 4 de stockage et de traitement des vapeurs de carburant.

En sortie des clapets 2, 2a de ventilation, les canalisations de protection 5, 5a peuvent être soit emmanchées en force sur les sorties des clapets 2, 2a via un processus adapté. Dans ce cas de figure, ces canalisations de protection 5, 5a ne pourront pas être démontables, ce qui les rend moins cher à fabriquer. En alternative, ces canalisations peuvent être encliquetées sur le clapet 2, 2a de ventilation associé par l'intermédiaire d'un moyen d'encliquetage, ce qui est une solution plus onéreuse mais démontable.

Lesdits au moins deux clapets 2, 2a de ventilation peuvent être disposés chacun vers une extrémité longitudinale respective de la face supérieure 1a de l'enveloppe externe du réservoir 1 de carburant. Les deux canalisations de protection 5, 5a peuvent s'étendre au moins partiellement en sens inverse vers l'autre extrémité longitudinale de l'enveloppe opposée à l'extrémité longitudinale portant leur clapet 2, 2a de ventilation associé, chaque canalisation de protection 5, 5a formant une boucle 6, 6a à ladite autre extrémité longitudinale.

Il est à considérer qu'il n'y a pas que des architectures de réservoir 1 avec des clapets 2, 2a soudés à l'extérieur de l'enveloppe comme ici aux figures. Il peut exister également des réservoirs 1 à carburant dont les clapets 2, 2a sont soudés et/ou assemblés à l'intérieur de l'enveloppe, ceci notamment pour des systèmes devant répondre aux normes les plus sévères. La présente invention couvre cependant aussi ces versions en étant valable pour tout type de réservoir 1 à carburant essence, quelqu'en soit leur processus de fabrication.

D'autres solutions techniques peuvent répondre au problème de l'introduction non désiré de carburant liquide dans le dispositif 4 de stockage et de traitement des vapeurs de carburant. Si le véhicule est conçu pour permettre de localiser le dispositif 4 de stockage et de traitement des vapeurs de carburant en hauteur, plus haut que le réservoir 1 à carburant et son ou ses clapets 2, 2a de ventilation, alors le risque est faible.

Une autre solution technique serait d'ajouter une boîte de séparation liquide-vapeur entre les clapets de ventilation et le dispositif de stockage et de traitement des vapeurs de carburant, cette boîte servirait à stocker le carburant qui franchirait les clapets puis ce carburant devrait être réacheminé vers le réservoir et non vers le dispositif de stockage et de traitement des vapeurs de carburant. Cette solution technique présente cependant des limites et des contraintes importantes mais peut également être une réponse au problème à la base de la présente invention.

L'invention n'est nullement limitée aux modes de réalisation décrits et illustrés qui n'ont été donnés qu'à titre d'exemples.

## Revendications

1. Réservoir (1) de carburant délimité par une enveloppe externe dont une face, destinée à être une face supérieure (1a) en position montée du réservoir (1) de carburant dans un véhicule automobile, porte au moins un clapet (2, 2a) de ventilation raccordé à une canalisation de ventilation (3) évacuant des vapeurs de carburant sortant du réservoir (1) par ledit au moins un clapet (2, 2a) de ventilation destinées à un dispositif (4) de stockage et de traitement des vapeurs de carburant, le réservoir (1) comprenant une canalisation de protection (5, 5a) présentant une extrémité d'entrée reliée audit au moins un clapet (2, 2a) et une extrémité de sortie reliée à une entrée de la canalisation de ventilation (3), une portion (6, 6a) de la canalisation de protection (5, 5a) présentant des moyens d'interdiction de passage de carburant liquide vers la canalisation de ventilation (3), la canalisation de protection (5, 5a) dudit au moins un clapet (2, 2a) s'étendant le long de la face supérieure (1a) de l'enveloppe du réservoir (1) de carburant, **caractérisé en ce qu'**au moins un sillon est creusé sur la face supérieure (1a) de l'enveloppe du réservoir (1) de carburant pour une réception au moins partielle de la canalisation de protection (5, 5a).

2. Réservoir (1) selon la revendication précédente, dans lequel les moyens d'interdiction de passage de carburant liquide vers la canalisation de ventilation (3) sont un positionnement surélevé de la portion dite ci-après surélevée (6, 6a) de canalisation de protection (5, 5a) par rapport au niveau dudit au moins un clapet (2, 2a) de ventilation.

3. Réservoir (1) selon la revendication précédente, dans lequel une hauteur du positionnement surélevé est déterminée par expérience, la hauteur étant suffisante pour que la portion surélevée (6, 6a) de canalisation de protection (5, 5a) soit au-dessus du niveau dudit au moins un clapet (2, 2a) de ventilation en conditions de roulage du véhicule automobile sur une route inclinée ou par dévers faisant passer la face supérieure (1a) de l'enveloppe externe du réservoir (1) d'un plan horizontal à un plan incliné avec ledit au moins un clapet (2, 2a) de ventilation se trouvant dans une portion alors la plus basse de la face supérieure (1a) dans le plan incliné.

4. Réservoir (1) selon l'une quelconque des revendications 2 ou 3, dans lequel la portion surélevée forme une boucle (6, 6a), une branche amont de la canalisation de protection (5, 5a) raccordée à la boucle (6, 6a) s'étendant dudit au moins un clapet (2, 2a) de ventilation vers la portion surélevée (6, 6a) et une branche aval de la canalisation de protection (5, 5a) raccordée à la boucle (6, 6a) s'étendant de la portion surélevée (6, 6a) vers la canalisation de ventilation (3).

5. Réservoir (1) selon la revendication précédente, dans lequel ledit au moins un sillon présente une partie recevant au moins partiellement simultanément la canalisation de protection (5, 5a) et la canalisation de ventilation (3).

6. Réservoir (1) selon l'une quelconque des revendications précédentes, dans lequel au moins une barre (7) de maintien est superposée localement à la canalisation de protection (5, 5a), ladite au moins une barre (7) de maintien s'étendant de 60° à 120° par rapport à la canalisation de protection (5, 5a), les extrémités longitudinales de ladite au moins une barre (7) de maintien présentant des moyens d'encliquetage dans la face supérieure (1a) de l'enveloppe externe du réservoir (1) de carburant.

7. Réservoir (1) selon l'une quelconque des revendications précédentes, dans lequel le réservoir (1) de carburant comporte au moins deux clapets (2, 2a) de ventilation, chaque clapet (2, 2a) de ventilation présentant une canalisation de protection (5, 5a) respective, les deux canalisations de protection (5, 5a) présentant un point de raccordement (8) pour déboucher simultanément dans la canalisation de ventilation (3).

8. Réservoir (1) selon la revendication précédente, dans lequel lesdits au moins deux clapets (2, 2a) de ventilation sont disposés chacun vers une extrémité longitudinale respective de la face supérieure (1a) de l'enveloppe externe du réservoir (1) de carburant, les deux canalisations de protection (5, 5a) s'étendant en sens inverse vers l'autre extrémité longitudinale de l'enveloppe opposée à l'extrémité longitudinale portant leur clapet (2, 2a) de ventilation associé, chaque canalisation de protection (5, 5a) formant une boucle (6, 6a) à ladite autre extrémité longitudinale.

## Patentansprüche

1. Kraftstofftank (1), der durch ein Außengehäuse begrenzt ist, dessen eine Seite eine Oberseite (1a) in der montierten Position des Kraftstofftanks (1) sein soll ein Kraftfahrzeug trägt mindestens ein Belüftungsventil (2, 2a), das mit einem Belüftungsrohr (3) verbunden ist und Kraftstoffdämpfe ablässt, die den Tank (1) durch das mindestens eine Ventil (2, 2a) zur Belüftung verlassen, die für eine Vorrichtung (4) zum Speichern und Verarbeiten von Kraftstoffdämpfen, wobei der Tank (1) ein Schutzrohr (5, 5a) aufweist, dessen Einlassende mit diesem verbunden ist minus ein Ventil (2, 2a) und ein Auslaßende mit einem Einlass des angeschlossenen Lüftungsrohr (3), ein Teil (6, 6a) des Schutzrohres (5, 5a) mittels Verbot Durchtritt von flüssigem Kraftstoff zu den mit Entlüftungsrohr (3), wobei sich das Schutzrohr (5, 5a) des mindestens einen Ventils (2, 2a) entlang der Oberseite (1a) des Gehäuses des Tanks (1) von erstreckt Kraftstoff, **dadurch gekennzeichnet, dass** mindestens eine Nut an der Oberseite (1a) des Gehäuses des Kraftstofftanks (1) zur zumindest teilweisen Aufnahme des Schutzrohrs (5, 5a) ausgehöhlt ist

2. Tank (1) nach dem vorhergehenden Anspruch, wobei die Mittel zum Verhindern des Durchgangs von flüssigem Kraftstoff zum Belüftungsrohr (3) a sind erhöhte Positionierung des sogenannten erhöhten Abschnitts (6, 6a) des Schutzrohrs (5, 5a) in Bezug auf das Niveau des mindestens einen Belüftungsventils (2, 2a).

3. Tank (1) nach dem vorhergehenden Anspruch, bei dem eine Höhe der angehobenen Position durch Erfahrung bestimmt wird, wobei die Höhe ausreicht, um den angehobenen Abschnitt (6, 6a) des Schutzrohrs (5, 5a) zu erreichen über dem Niveau des mindestens einen Belüftungsventils (2, 2a) unter Betriebsbedingungen des Kraftfahrzeugs auf einer geneigten Straße oder an einem Hang, der die Oberseite (1a) der Außenhülle des Tanks (1) einer Horizontalen passiert Ebene zu einer schiefen Ebene, wobei sich das mindestens eine Belüftungsventil (2, 2a) in einem dann unteren Abschnitt der Oberseite (1a) in der schiefen Ebene befindet.

4. Tank (1) nach einem der Ansprüche 2 oder 3, wobei der Abschnitt angehoben bildet eine Schleife (6, 6a), einen stromaufwärtigen Zweig des Schutzrohrs (5, 5a), der mit der Schleife (6, 6a) verbunden ist und sich von dem mindestens einen Ventil (2, 2a) der Belüftung in Richtung des angehobenen Abschnitts (2, 2a) erstreckt. 6, 6a) und ein nachgeschalteter Zweig der Schutzrohr (5, 5a), das mit der Schlaufe (6, 6a) verbunden ist und sich vom erhöhten Abschnitt (6, 6a) zum Belüftungsrohr (3) erstreckt.

5. Tank (1) nach dem vorhergehenden Anspruch, wobei die mindestens eine Nut einen Teil aufweist, der mindestens teilweise gleichzeitig das Rohr von aufnimmt Schutz (5, 5a) und Lüftungskanal (3).

6. Tank (1) nach einem der vorhergehenden Ansprüche, wobei mindestens eine Haltestange (7) lokal dem Schutzrohr (5, 5a) überlagert ist, wobei sich mindestens eine Haltestange (7) von 60° bis 120° in Bezug auf das Schutzrohr (5, 5a), dessen Längsenden wobei mindestens eine Haltestange (7) Schnappverschlussmittel in der Oberseite (1a) des Außengehäuses des Kraftstofftanks (1) aufweist.

7. Tank (1) nach einem der vorhergehenden Ansprüchen, wobei der Kraftstofftank (1) mindestens zwei Belüftungsventile (2, 2a), wobei jedes Lüftungsventil (2, 2a) einen Rohrschutzes (5, 5a) jeweils haben die beiden Schutzrohre (5, 5a) einen Verbindungspunkt (8), der gleichzeitig in das Belüftungsrohr (3) führt.

8. Tank (1) nach dem vorhergehenden Anspruch, bei dem mindestens zwei Entlüftungsventile (2, 2a) jeweils angeordnet auf einem Längsende jeweils der oberen Fläche (1a) der Außenschale des Behälters (1) von Treibstoff, ihre beiden Schutzrohren (5, 5a) in der entgegengesetzten Richtung zu dem anderen Längsende des Gehäuses gegenüber dem Längsende erstreckt Trag zugehöriges Belüftungsventil (2, 2a), wobei jedes Schutzrohr (5, 5a) an dem anderen Längsende eine Schleife (6, 6a) bildet.

## Claims

1. Fuel tank (1) delimited by an outer casing, one face of which is intended to be an upper face (1a) in the mounted position of the fuel tank (1) in a motor vehicle, carries at least one ventilation valve (2, 2a) connected to a ventilation duct (3) discharging fuel vapors leaving the tank (1) through said at least one valve (2, 2a) for ventilation intended to a device (4) for storing and processing fuel vapors, the tank (1) comprising a protective pipe (5, 5a) having an inlet end connected to said minus a valve (2, 2a) and an outlet end connected to an inlet of the ventilation duct (3), a portion (6, 6a) of the protective duct (5, 5a) having means of prohibition passage of liquid fuel to the ventilation duct (3), the protective pipe (5, 5a) of said at least one valve (2, 2a) extending along the upper face (1a) of the casing of the tank (1) of fuel, **characterized in that** at least one groove is hollowed out on the upper face (1a) of the casing of the fuel tank (1) for at least partial reception of the protective pipe (5, 5a).

2. Tank (1) according to the preceding claim, wherein the means for preventing the passage of liquid fuel to the ventilation pipe (3) are a elevated positioning of the so-called raised portion (6, 6a) of the protective pipe (5, 5a) relative to the level of said at least one ventilation valve (2, 2a).

3. Tank (1) according to the preceding claim, in which a height of the raised position is determined by experience, the height being sufficient for the raised portion (6, 6a) of the protective pipe (5, 5a) to be at-above the level of said at least one ventilation valve (2, 2a) under running conditions of the motor vehicle on an inclined road or on a slope passing the upper face (1a) of the outer shell of the tank (1) of a horizontal plane to an inclined plane with said at least one ventilation valve (2, 2a) located in a then lower portion of the upper face (1a) in the inclined plane.

4. Tank (1) according to any one of claims 2 or 3, wherein the portion raised forms a loop (6, 6a), an upstream branch of the protective pipe (5, 5a) connected to the loop (6, 6a) extending from said at least one valve (2, 2a) of ventilation towards the portion raised (6, 6a) and a downstream branch of the protective pipe (5, 5a) connected to the loop (6, 6a) extending from the raised portion (6, 6a) to the ventilation duct (3).

5. Tank (1) according to the preceding claim, wherein said at least one groove has a part receiving at least partially simultaneously the pipe of protection (5, 5a) and the ventilation duct (3).

6. Tank (1) according to any one of the preceding claims, wherein at least one retaining bar (7) is superimposed locally on the protective pipe (5, 5a), said at least one bar (7) of holding extending from 60° to 120° with respect to the protective pipe (5, 5a), the longitudinal ends of said at least one retaining bar (7) having snap-fastening means in the upper face (1a) of the outer casing of the fuel tank (1).

7. Tank (1) according to any one of the preceding claims, wherein the fuel tank (1) comprises at least two ventilation valves (2, 2a), each ventilation valve (2, 2a) having a pipe of protection (5, 5a) respective, the two protection pipes (5, 5a) having a connection point (8) to lead simultaneously into the ventilation pipe (3).

8. Tank (1) according to the preceding claim, wherein said at least two ventilation valves (2, 2a) are each disposed towards a longitudinal end respective of the upper face (1a) of the outer shell of the tank (1) of fuel, the two protective pipes (5, 5a) extending in the opposite direction toward the other longitudinal end of the shell opposite the longitudinal end carrying their associated ventilation valve (2, 2a), each protective pipe (5, 5a) forming a loop (6, 6a) at said other longitudinal end.
